# EUROPÄISCHE PATENTSCHRIFT

(11) **EP 1 386 299 B1**
(45) Veröffentlichungstag und Bekanntmachung des Hinweises auf die Patenterteilung: **18.06.2008**
(21) Anmeldenummer: 02740488.8
(22) Anmeldetag: 20.04.2002
(51) Int. Cl.: G08C 15/12, B60R 21/01

(54) **VERFAHREN ZUR ÜBERTRAGUNG EINES SENSORDATENSIGNALS UND EINES ZUSATZDATENSIGNALS VON EINER SENSORBAUGRUPPE ZU WENIGSTENS EINEM EMPFÄNGER**
METHOD FOR THE TRANSMISSION OF A SENSOR DATA SIGNAL AND AN ADDITIONAL DATA SIGNAL FROM A SENSOR COMPONENT TO AT LEAST ONE RECEIVER
PROCEDE DE TRANSMISSION D'UN SIGNAL DE DONNEES DE CAPTEUR ET D'UN SIGNAL DE DONNEES SUPPLEMENTAIRES, D'UN BLOC CAPTEUR A AU MOINS UN RECEPTEUR

(30) Priorität: 05.05.2001 DE 10121879
(43) Veröffentlichungstag der Anmeldung: 04.02.2004
(73) Patentinhaber: Conti Temic microelectronic GmbH, 90411 Nürnberg (DE)
(72) Erfinder: WEICHENBERGER, Lothar, 86669 Klingsmoos (DE)
(86) Internationale Anmeldenummer: PCT/EP2002/004366
(87) Internationale Veröffentlichungsnummer: WO 2002/091327

(56) Entgegenhaltungen:
- WO-A-94/08823
- DE-A- 19 634 714
- DE-A- 19 813 923

## Beschreibung

Die Erfindung betrifft ein Verfahren zur Übertragung eines Sensordatensignals und eines Zusatzdatensignals von einer Sensorbaugruppe zu wenigstens einem Empfänger.

Üblicherweise misst ein Sensor eine bestimmte physikalische Größe und erzeugt ein entsprechendes Sensordatensignal, welches von einer Datenübertragungseinheit der Sensorbaugruppe zum Empfänger übertragen und dort in Abhängigkeit dessen eine dem Empfänger des Sensordatensignals zugeordnete Anwendungseinheit gesteuert wird. Sollen neben dem Sensordatensignal weitere Daten, seien es Steuersignale zur Steuerung der Datenübertragung oder Zusatzdaten übertragen werden, so kann dafür ein anderer Wertebereich des Datensignals verwendet werden, also beispielsweise bei analogen Signalen eine höhere Amplitude, bei digitalen Signalen ein reservierter Bitwertebereich. Alternativ dazu besteht die Möglichkeit eines Multiplexbetriebs, bei dem für das Zusatzdatensignal der Wertebereich des Sensordatensignals genutzt werden kann. In allen Fällen müssen jedoch neben der Sensorbaugruppe als Sender auch jeweils alle Empfänger dieses Datenübertragungsprotokoll beziehungsweise die jeweilige Betriebsart erkennen. Gerade bei Sensordatenbussystemen, bei denen eine Mehrzahl von Sensorbaugruppen und Empfängern an einem Bus zusammengeschlossen sind, ist daher eine Anpassung aller Busteilnehmer erforderlich, selbst wenn nur zwischen einigen wenigen Teilnehmern solche Zusatzdaten ausgetauscht werden sollen. Eine Nutzung von Baugruppen einer älteren Generation, also eine Abwärtskompatibilität ist somit ausgeschlossen. Anderenfalls könnte es bei Empfängern, die nicht erkennen, dass es sich bei den übertragenen Daten um Zusatzdatensignale handelt, zu Fehlfunktionen im Empfänger beziehungsweise in der Anwendungseinheit kommen. Beispiele bekannter Sensorbaugruppen sind aus folgenden Dokumenten bekannt: DE-A-196 34 714 (ITT AUTOMOTIVE EUROPE GMBH); DE-A-198 13 923 (ROBERT BOSCH GBMH); WO-A-94 08823 (ROBERT BOSCH GMBH). Derartige Sensordatenbussysteme werden beispielsweise in Kraftfahrzeugen für die Erfassung von sicherheitsrelevanten Sensordatensignalen für die Ansteuerung von lnsassenschutzeinrichtungen genutzt.

Würden hier beispielsweise anstelle von Beschleunigungsdatensignalen Zusatzdatensignale übertragen und ein Empfänger einer Insassenschutzeinrichtung dies nicht erkennen, weil entweder er ein entsprechendes Steuersignal aufgrund einer Störung gerade nicht empfangen hat oder aber überhaupt nicht auf eine solche Übertragung von Zusatzdatensignalen vorbereitet ist, so besteht die Gefahr der Fehlauslösung der Insassenschutzeinrichtung.

Aufgabe der Erfindung ist, ein Verfahren zur Übertragung eines Sensordatensignals und eines Zusatzdatensignals von einer Sensorbaugruppe zu wenigstens einem Empfänger vorzustellen, bei dem Fehlfunktionen in den Empfängern auszuschließen sind. Diese Aufgabe wird durch die Merkmale des Anspruchs 1 gelöst. Vorteilhafte Weiterbildungen sind den Unteransprüchen zu entnehmen.

Grundgedanke dabei ist, für die Übertragung des Zusatzdatensignals nur denjenigen Wertebereich des Sensordatensignals zu verwenden, der für die Steuerung der Anwendungseinheit unkritisch ist, bei dem ein Empfänger des Sensordatensignals, der fälschlicherweise das Zusatzdatensignal als ein Sensordatensignal interpretiert, also keine entscheidenden Fehlfunktionen zeigt.

Es wird also bewußt auf einen oft sehr erheblichen Teil des Sensordatensignalwertebereichs und damit auf Übertragungskapazität zugunsten der gewonnenen Funktionssicherheit verzichtet. Dafür bietet sich grundsätzlich bei nahezu allen Datensignalen immer der Rauschbereich an, also der Wertebereich des Sensordatensignals, der auf ein Rauschen der zu messenden Größe sowie der Sensorbaugruppe zurückzuführen ist. Dieser Rauschbereich wird daher von herkömmlichen Empfängern nicht ausgewertet. Der nutzbare Bereich dieses Rauschbereichs wiederum ist nur bei analogen Signalen durch den auf der Übertragungsstrecke hinzukommenden Rauschanteil nach unten hin begrenzt, bei digitaler Signalübertragung natürlich nicht.

Darüber hinaus kann sich jedoch zusätzlich abhängig von der jeweiligen Anwendung ein Wertebereich des Sensordatensignals ergeben, in dem es ebenfalls bei der jeweiligen Anwendung zu keiner Fehlfunktion kommt, wenn anstelle von Sensordatensignalen Zusatzdatensignale gesendet werden.

Dies ist beispielsweise bei den Anwendungen der Fall, bei denen die Sensordatensignale mit einem Schwellwert verglichen und erst bei Sensordatensignalwerten oberhalb des Schwellwertes die Anwendungseinheit aktiviert wird. Der verwertbare Sensordatensignalwertebereich ist hierbei oft deutlich größer als der Rauschbereich.

Ein bevorzugtes Anwendungsbeispiel ergibt sich für eine Sensorbaugruppe in einem Insassenschutzsystem für Kraftfahrzeuge, bei der die Sensorbaugruppe eine sicherheitsrelevante Größe mißt und ein der sicherheitsrelevanten Größe entsprechendes Sensordatensignal erzeugt, wobei zumindest eine Aktivierungseinheit zumindest einer Insassenschutzeinrichtung vorgesehen ist, welche die Sensordatensignale empfängt und in Abhängigkeit von diesem Sensordatensignal über die Auslösung der Insassenschutzeinrichtung(en) entscheidet. Der Sensordatenwertebereich des Sensordatensignals weist dabei einen sicherheitsunkritischen Wertebereich auf, in dem die Aktivierungseinheit keine Aktivierung der Insassenschutzeinrichtungen einleitet. Deshalb wird zur Übertragung der Zusatzdaten ausschließlich dieser sicherheitsunkritische Wertebereich verwendet.

Die Erfindung soll nachfolgend anhand von Ausführungsbeispielen und Figuren näher erläutert werden. Kurze Beschreibung der Figuren:
- Figur 1: Sensorbaugruppe angeschlossen an einen Sensorbus zur Übertragung eines Sensordatensignals sowie eines Zusatzdatensignals
- Figur 2: Wertebereich eines analogen Sensordatensignals und eines analogen Zusatzdatensignals
- Figur 3: digitaler Codewörter-Wertebereich für Sensordatensignal und Zusatzdatensignal einer Beschleunigungssensorbaugruppe
- Figur 4: Aufbau des gesamten Datenprotokolls

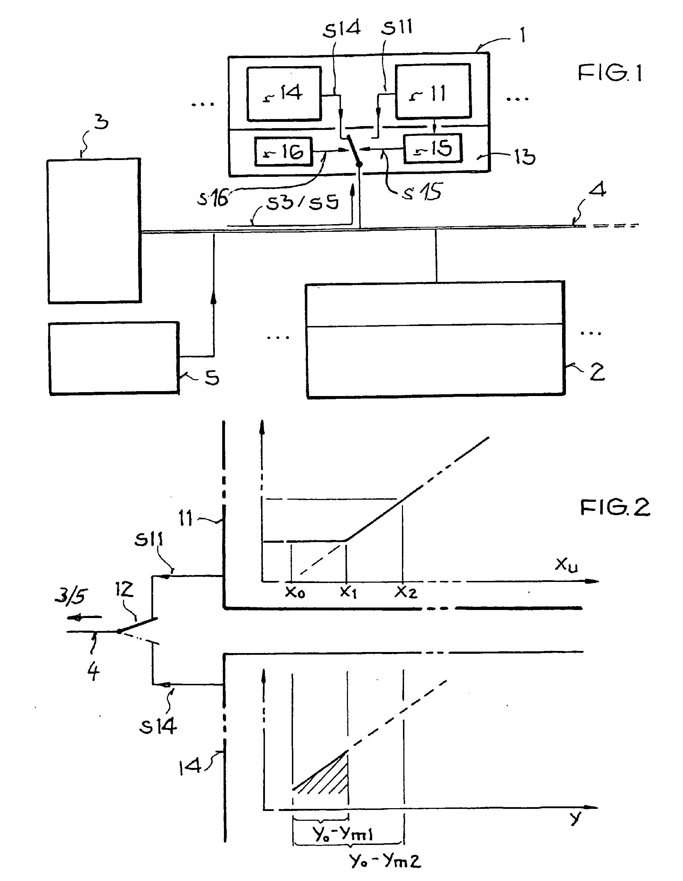

Die Figur 1 zeigt eine Sensorbaugruppe 1, die ein Sensordatensignal s11 einer Sensordateneinheit 11, also die eigentliche Sensorfunktion, zu wenigstens einem Empfänger 2 überträgt, der in Abhängigkeit vom Sensordatensignal s1 1 eine nicht näher gezeigte Anwendungseinheit steuert. Hier in diesem Beispiel sendet eine Beschleunigungssensorbaugruppe Beschleunigungsdatensignale an eine Aktivierungseinheit eines Insassenschutzsystems.

Über den gleichen Übertragungskanal 4 soll auch ein in einem Zusatzdatenspeicher 14 der Sensorbaugruppe abgelegtes Zusatzdatensignal s14 übertragen werden.

In diesem Beispiel sei davon auszugehen, dass der Empfänger 2 eine herkömmliche Aktivierungseinheit eines Insassenschutzsystems und nicht auf den Empfang von Zusatzdaten vorbereitet ist. Mit dem Übertragungskanal 4 ist in diesem Beispiel auch eine Zentraleinheit 3 sowie eine externe über einen Kontakt anschließbare Ausleseeinheit 5 verbunden, die zum Auslesen von den Zusatzdaten dient.

Auf ein Steuersignal hin, welches hier als s5 von der Ausleseeinheit 5 stammt, wird zumindest kurzzeitig anstelle des Sensordatensignals s11 ein Zusatzdatensignal s14 gesendet. Der auf den Empfang von Zusatzdaten nicht vorbereitete Empfänger 2 wird dieses Zusatzdatensignal s14 folglich als Sensordatensignal interpretieren und als solches auswerten. Als Signalwertebereich für das Zusatzdatensignal s14 wird jedoch nur der für die Steuerung der Anwendungseinheit, hier der Insassenschutzeinrichtung, unkritische Wertebereich verwendet, so dass der Empfänger 2 dadurch nicht gestört wird. Die Ausleseeinheit 5 hingegen kann das Zusatzdatensignal als solches empfangen und auswerten.

Das Steuersignal zum Umschalten (12) vom Sensordatensignal s11 auf das Zusatzdatensignal s14 kann auch von der Zentraleinheit 3 in Form eines Signals s3 erzeugt werden, wenn diese beispielsweise die Zusatzdaten benötigt, wobei die Art des Steuersignals nicht unbedingt ein digitales Datensignal sein muß, welches explizit und einzig für diesen Zweck gesendet wird, sondern es kann auch ein Steuersignal für noch andere Funktionen genutzt oder ein solches Steuersignal für den Umschalter 12 sich durch bestimmte Funktionszustände, beispielsweise einen Interrupt oder ein Power-On ergeben.

Zudem kann das Steuersignal auch vom Sensor 1 selbst erzeugt werden, wenn dieser beispielsweise die Zusatzdaten immer auf einen internen Reset der Sensorbaugruppe hin, beispielsweise nach einem Power-On, überträgt oder in einem mittels einer Steuereinheit 1 6 in einem vorgegebenen, ggfs. auch einstellbaren festen zeitlichen Rhythmus.

Zudem ist auch eine Abfrage durch einen Empfänger 2.x einer Anwendungseinheit, der bereits auf den Empfang von Zusatzdatensignalen eingerichtet ist, denkbar.

Die Art der Anregung zur Umschaltung auf die Übertragung des Zusatzdatensignals s14 anstelle des Sensordatensignals s11 kann also für den jeweiligen Bedarfsfall sehr flexibel angepaßt werden.

Die Datenübertragungseinheit 13 der Sensorbaugruppe 1 weist zudem als bevorzugte Weiterbildung eine Überwachungseinheit 15 auf, die zumindest während der Übertragung des Zusatzdatensignals s14 die aktuellen Werte des Sensordatensignals s11 erfasst, mit vorgegebenen Sollwerten vergleicht und bei Überschreitung dieser Sollwerte die Übertragung des Zusatzdatensignals s14 abbricht und auf die Übertragung des Sensordatensignals s11 wechselt, also selbsttätig den Schalter 12 wieder umschaltet. Dadurch wird sichergestellt, dass während der Übertragung von Zusatzdaten keine für die Steuerung der Anwendungseinheit entscheidenden Sensordatensignale verloren gehen.

Figur 2 skizziert beispielhaft den Wertebereich eines analogen Sensordatensignals x0 bis xn, wobei der Wertebereich x0 - x1 dem Rauschbereich des Sensordatensignals entspricht, der auf ein Rauschen der zu messenden Größe sowie der Sensorbaugruppe zurückzuführen ist.

Dieser Rauschbereich x0 - x1 wir daher vom Empfänger 2 nicht ausgewertet, bspw. durch Vergleich mit einer unteren Schwelle eliminiert. Dieser Rauschbereich ist daher für die Steuerung der Anwendungseinheit völlig unbedeutsam und daher unkritisch.

Für das zu übertragende analoge Zusatzdatensignal s14 wird daher als Signalwertebereich y0 - ym dieser Rauschbereich von x0 - x1 verwendet, so dass der Empfänger 2, der ja die Sensor- und Zusatzdatensignale nicht voneinander unterscheiden kann, darin nur ein vernachlässigbares Rauschen erkennt. Die Ausleseeinheit 5 jedoch ist genau auf diesen bei analogen Signalen üblicherweise unteren Signalbereich optimiert und kann daher das Zusatzdatensignal s14 empfangen. Der darunter liegende Wertebereich von 0 bis x0 wird wegen eines möglichen Rauschens auf dem Übertragungskanal bei der analogen Signalübertragung nicht verwendet.

Liegt hingegen eine Anwendung vor, bei welcher der Empfänger 2 das Sensordatensignal s11 mit einem Schwellwert x2 vergleicht und nur bei einem den Schwellwert x2 übersteigenden Sensordatensignal s11 die Anwendungseinheit ansteuert, kann als Signalwertebereich y0 - ym2 für das Zusatzdatensignal s14 der Wertebereich unterhalb dieses Schwellwerts x0 - x2 verwendet werden. Diese erweiterte Nutzung des Sensordatensignalwertebereichs ist dabei für eine Vielzahl von Anwendungseinheiten möglich, insbesondere bei Fehlerdiagnoseeinrichtungen, die nur bei einem Fehler aktiv sind, bei Unfallsensoren, die auch erst ab einem Schwellwert bestimmte Anwendungseinheiten aktiveren müssen, wobei der Schwellwert x2 und die Menge der darauf aufgeteilten Zusatzdatensignale s14 anwendungsspezifisch definiert werden.

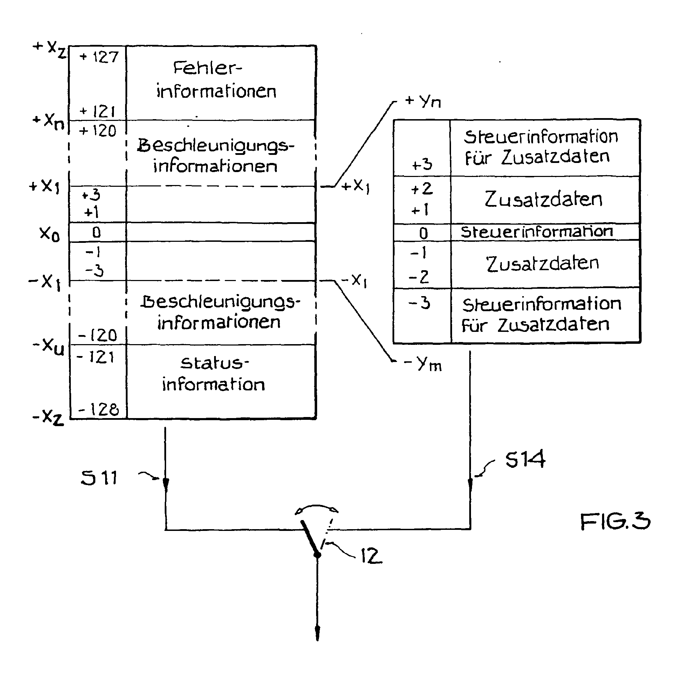

Figur 3 zeigt ein Verfahren, bei dem die Datenübertragung der Sensor- und Zusatzdaten in digitalen Codewörtern erfolgt. Die Codewörter werden hier in Form einer 8-Bit-Folge gebildet, was 256 Codewörtern entspricht. Aufgrund der anwendungsspezifischen Besonderheit des zu übertragenden Sensordatensignals, hier eines vorzeichenbehafteten Beschleunigungssignals, werden die Codewörter nicht von 0 bis 256, sondern von -128 bis +127 dargestellt, was aber für das Verfahren zunächst unbedeutsam ist.

Von der Menge von 256 Codewörtern ist ein Teil, hier von +127 bis +120 sowie von -121 bis - 128, für die Übertragung von Steuersignalen und der andere Teil von +120 bis -120 für die Übertragung von Sensordaten vorgesehen. Von den für die Sensordatenübertragung verwendeten Codewörtern (+120 bis -120) wiederum entspricht ein Teil Sensordaten, die für die Steuerung der Anwendungseinheit unkritisch" sind, hier aufgrund besonders strenger Anforderungen begrenzt auf die Codewörter von +3 bis -3. Nur dieser Teil der Codewörter wird für die Übertragung der Zusatzdaten verwendet.

In diesem Beispiel in Figur 3 sollen nämlich die Sensordatensignale eines Beschleunigungssensors übertragen werden, wobei den Codewörtern +120 bis - 120 entsprechende Werte der Beschleunigung zugeordnet sind, also die Erdbeschleunigung g gerade dem Codewort 1 entspricht. Beschleunigungssensoren erfassen dabei üblicherweise ihre Werte vorzeichenbehaftet, was auch für die Auswertung im Bereich der Crasherkennung für die Steuerung von Insassenschutzsystemen besonders wichtig ist. Der für die Übertragung der Zusatzdaten verwendete Teil der Codewörter entspricht daher gerade einmal dem Bereich von +3g bis -3g, also einem äußerst kleinen und für die Crasherkennung unkritischen Beschleunigungssignalwertebereich. Dabei wurde jedoch noch eine Besonderheit der Crasherkennung berücksichtigt, nämlich dass die Aktivierungseinheit zur Entscheidung über die Aktivierung der Insassenschutzeinrichtung(en) eine Integration des Beschleunigungssignals und einen Vergleich des Beschleunigungsintegralsignals mit einer Aktivierungsschwelle durchführt. Diese Integration hat nämlich zur Folge, das bei wiederholter Übertragung der jeweils größten Werte eines Wertebereichs zwar diese als Beschleunigungssignal selbst noch nicht eine Auslöseschwelle erreichen, jedoch das daraus resultierende Beschleunigungsintegralsignal die Aktivierungsschwelle durchaus erreichen kann.

Der für die Übertragung der Zusatzdaten verwendete sicherheitsunkritische Wertebereich ist daher so bestimmt, dass auch bei einer Integration der größten Werte aus dem sicherheitsunkritischen Wertebereich die Aktivierungsschwelle keinesfalls erreicht wird, letztlich sichergestellt wird, daß die Datenübertragungseinheit das Zusatzdatensignal s14 unter Verwendung ausschließlich eines sicherheitsunkritischen Wertebereichs (x0 - x1 entspricht hier +3g bis -3g) überträgt, indem eine Aktivierung der Insassenschutzeinrichtungen durch einen Empfänger, der die Zusatzdaten für Sensordaten hält, ausgeschlossen ist.

In diesem Beispiel wird das Verfahren verwendet, Sensorherstellungsdaten, insbesondere eine individuelle Sensorbaugruppennummer mit jeden Reset des Sensors abzufragen bzw. zu übertragen Da die Sensorherstellungsdaten jedoch relativ umfangreich sind, ist eine Übertragung der Zusatzdaten in einer Folge von mehreren Codewörtern erforderlich.

Um dabei Fehler wiederum zu vermeiden, ist die Verwendung von Positionsnummern erforderlich, so daß neben den eigentlichen Zusatznutzdaten auch diese Zusatzsteuerdaten übertragen werden müssen und die Menge der verfügbaren Codewörter für die Zusatznutzdaten sich weiter einschränkt.

Dabei wird darauf geachtet, daß auch keinesfalls eine Folge von Codewörtern, selbst wenn man diese in der denkbar ungünstigsten Konstellation aneinanderreiht, die Auslösung der Insassenschutzeinrichtungen erreicht.

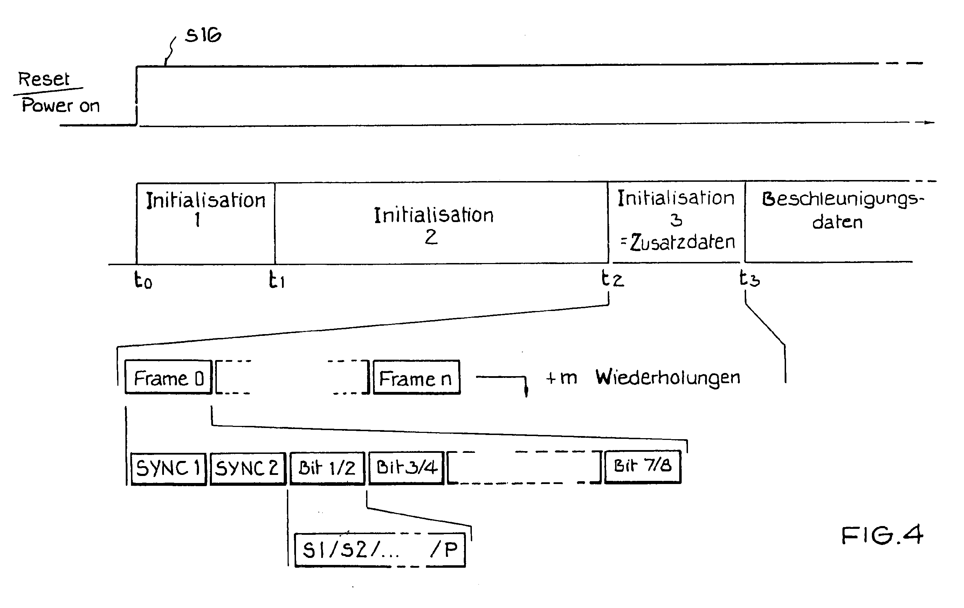

Figur 4 skizziert den Aufbau sowie die Unterteilung des gesamten Datenübertragungsprotokolls, wobei bei dieser Anwendung auf einen Reset, sei dieser intern von der Sensorbaugruppe 1 selbst erfolgt oder extern durch ein Steuersignal von der Zentraleinheit 3 oder der Ausleseeinheit 5, in t0 zunächst eine Initialisation 1 und 2 erfolgt, an die sich bei herkömmlichen Beschleunigungssensorbaugruppen in t2 die Beschleunigungsdaten anschließen würden. Hier werden jedoch zunächst zwischen t2 und t3 die Zusatzdatensignale übertragen, wobei es dank der Verwendung ausschließlich des für die Aktivierungseinheit der Insassenschutzeinrichtung unkritischen Sensordatenbereichs für die Übertragung der Zusatzdaten auch bei Empfängern ohne Kenntnis dieses neuen Datenprotokolls zu keine Fehlauslösungen kommt. Die Zusatzdaten werden dabei in n Frames gepackt, die in m Wiederholungen übertragen werden, wobei die Empfänger der Zusatzdaten dank dieser Wiederholungen selbst bei einer kurzzeitigen Störung auf dem Sensorbus 4 die Zusatzdaten später noch rekonstruieren können. Dazu weisen die Frames 2 8-Bit-Syncronisationsworte und nachfolgend 4 Datenworte je 8 Bit auf, wobei darin insgesamt nur je 2 Bit Nutzdaten enthalten sind und die anderen Bits für Startbits und Parity-Check genutzt werden. Dennoch können in einigen Hundert Millisekunden über den bestehenden Übertragungskanal 4 größere Zusatzdatenmengen wie Sensorherstellungsdaten übertragen werden.

Für die Synchronisation werden je zwei der Codewörter 0, 3 und -3 verwendet, jedoch die Kombinationen (+3,+3) und (-3,-3) ausgeschlossen, um gänzlich auszuschließen, das bei einer Integration dennoch der kritische Wertebereich erreicht würde.

Ein Frame kann daher maximal folgende Durchschnittswerte annehmen:

| Sync 1 | Sync 2 | Data 1 | Data 2 | Data 3 | Data 4 | Ø | | Sync 1 | Sync 2 | Data 1 | Data 2 | Data 3 | Data 4 | Ø |
|---|---|---|---|---|---|---|---|---|---|---|---|---|---|---|
| 0 | 0 | -2 | -2 | -2 | -2 | -1,2 | | 0 | 0 | 2 | 2 | 2 | 2 | 1,2 |
| 0 | 3 | -2 | -2 | -2 | -2 | -0,6 | | 0 | 3 | 2 | 2 | 2 | 2 | 1,8 |
| 0 | -3 | -2 | -2 | -2 | -2 | -1,8 | | 0 | -3 | 2 | 2 | 2 | 2 | 0,6 |
| 3 | -3 | -2 | -2 | -2 | -2 | -1,2 | | 3 | -3 | 2 | 2 | 2 | 2 | 1,2 |
| -3 | 0 | -2 | -2 | -2 | -2 | -1,8 | | -3 | 0 | 2 | 2 | 2 | 2 | 0,6 |
| 3 | 0 | -2 | -2 | -2 | -2 | -0,6 | | 3 | 0 | 2 | 2 | 2 | 2 | 1,8 |
| Ø über Frame= -1, 333 | | | | | | | | Ø über Frame= +1, 333 | | | | | | |

Im Mittel ist bei entsprechend verteilten Datenbits das Zusatzdatensignal annähernd gleichanteilsfrei. Eine Fehlauslösung kann also bereits recht sicher ausgeschlossen werden.

Zudem eine vollständig offset-freie Codierung des Zusatzdatensignals möglich, indem innerhalb eines zu vereinbarenden Rahmens die Zusatzdaten einmal normal und einmal invertiert übertragen werden. Dazu würde von den reservierten Synchronisationswörtern "+3" und "-3" eines als Signal für den jeweiligen Invertierungszustand genutzt. Stehen für bestimmte Anwendungen noch weniger unterscheidbare Codewörter im unkritischen Wertebereich zur Verfügung, so besteht zudem die Möglichkeit, im Grenzfall sogar aus einer mittels Polynomcodierung gefassten 1-Bit-Folge die entsprechenden Zusatzdatensignale zu übertragen und nachfolgend über die Polynomfunktion aus dem unkritischen und gegebenenfalls als Rauschen zu interpretierenden Wertebereich zu rekonstruieren.

Da die Resets auch von der Sensorbaugruppe selbst ausgelöst werden können, läßt sich nicht ausschließen, daß die Übertragung der Zusatzdaten in einem Zeitpunkt stattfinden würde, wenn das Sensordatensignal selbst sicherheitskritische Werte annehmen würde. Die Datenübertragungseinheit 13 der Beschleunigungssensorbaugruppe eines Insassenschutzsystems weist daher eine Überwachungseinheit 15 auf, die zumindest während der Übertragung des Zusatzdatensignals s14 die aktuellen Werte des Sensordatensignals s11 erfasst, mit vorgegebenen Sollwerten vergleicht und bei Überschreitung dieser Sollwerte die Übertragung des Zusatzdatensignals s14 abbricht und auf die Übertragung des Sensordatensignals s11 wechselt.

## Patentansprüche

1. Verfahren zur Übertragung eines Sensordatensignals (s11) und eines Zusatzdatensignals (s14) von einer Sensorbaugruppe (1) zu wenigstens einem Empfänger des Sensordatensignals (2) und einem Empfänger des Zusatzdatensignals (3, 5) über einen gemeinsamen Übertragungskanal (4),
a) wobei ein Sensor (11) eine zu messende Größe mißt und ein entsprechendes Sensordatensignal erzeugt,
b) der Empfänger (2) des Sensordatensignals (s11) in Abhängigkeit vom Sensordatensignal eine Anwendungseinheit steuert,
c) wobei der Wertebereich des Sensordatensignals (x0 - xn) einen für die Steuerung der Anwendungseinheit unkritischen Wertebereich (x0 - x1) aufweist, **dadurch kennzeichnet, dass**
d) eine Datenübertragungseinheit (13) der Sensorbaugruppe (1) auf ein Steuersignal (s3/s5/s15/s16/Uon) hin zumindest kurzzeitig anstelle des Sensordatensignals (s11) ein. Zusatzdatensignal (s14) sendet, wobei als Signalwertebereich (y0 - ym) für das Zusatzdatensignal (s14) der für die Steuerung der Anwendungseinheit unkritische Wertebereich (x0 - x1) verwendet wird.

2. Verfahren nach Anspruch 1, bei dem ein bestimmter Wertebereich (x0 - x1) des Sensordatensignals (s11) als Rauschbereich auf ein Rauschen der zu messenden Größe sowie der Sensorbaugruppe zurückzuführen ist und als Signalwertebereich (y0 - ym) für das Zusatzdatensignal (s14) der Rauschbereich (x0 - x1) verwendet wird.

3. Verfahren nach Anspruch 1, bei dem der Empfänger (2) des Sensordatensignals das Sensordatensignal mit einem Schwellwert (x2) vergleicht und nur bei einem den Schwellwert (x2) übersteigenden Sensordatensignal (s11) die Anwendungseinheit ansteuert, wobei als Signalwertebereich (y0 - ym2) für das Zusatzdatensignal (s14) der Wertebereich unterhalb dieses Schwellwerts (x0 - x2) verwendet wird.

4. Verfahren nach Anspruch 1, Sensorbaugruppe (1) in einem Insassenschutzsystem für Kraftfahrzeuge,
a) die Sensorbaugruppe (1) eine sicherheitsrelevante Größe mißt und ein der sicherheitsrelevanten Größe entsprechendes Sensordatensignal (s11) erzeugt,
b) zumindest eine Aktivierungseinheit (2) zumindest einer Insassenschutzeinrichtung vorgesehen ist, welche die Sensordatensignale (s11) empfängt und in Abhängigkeit von diesem Sensordatensignal (s11) über die Auslösung der Insassenschutzeinrichtung(en) entscheidet, wobei
c) der Sensordatenwertebereich (x0 - xn) des Sensordatensignals (s11) einen sicherheitsunkritischen Wertebereich (x0 - x1) aufweist und die Aktivierungseinheit bei Sensordatensignalen (s11) in diesem sicherheitsunkritischen Wertebereich (x0 - x1) keine Aktivierung der Insassenschutzeinrichtungen einleitet, und
d) auf ein vorgegebenes Steuersignal (s3,s5) die Datenübertragungseinheit das Zusatzdatensignal (s14) unter Verwendung ausschließlich des sicherheitsunkritischen Wertebereichs (x0 - x1) überträgt.

5. Verfahren nach Anspruch 4, wobei
a) der Sensor (11) ein Beschleunigungssensor ist, die Aktivierungseinheit zur Entscheidung über die Aktivierung der Insassenschutzeinrichtung(en) eine Integration des Beschleunigungssignals und einen Vergleich des Beschleunigungsintegralsignals mit einer Aktivierungsschwelle durchführt und
b) der für die Übertragung der Zusatzdaten verwendete sicherheitsunkritische Wertebereich so bestimmt ist, dass auch bei einer Integration der größten Werte aus dem sicherheitsunkritischen Wertebereich die Aktivierungsschwelle keinesfalls erreicht wird.

6. Verfahren nach einem der vorangehenden Ansprüche, bei dem die Datenübertragungseinheit (13) eine Überwachungseinheit (15) aufweist, die zumindest während der Übertragung des Zusatzdatensignals (s14) die aktuellen Werte des Sensordatensignals (s11) erfasst, mit vorgegebenen Sollwerten vergleicht und bei Überschreitung dieser Sollwerte die Übertragung des Zusatzdatensignals (s14) abbricht und auf die Übertragung des Sensordatensignals (s11) wechselt.

7. Verfahren nach einem der vorangehenden Ansprüche, bei dem die Datenübertragung in digitalen Codewörtern erfolgt,
a) wobei von den Codewörtern ein Teil für die Übertragung von Steuersignalen und der andere Teil für die Übertragung von Sensordaten vorgesehen ist,
b) von den für die Sensordatenübertragung verwendeten Codewörtern wiederum ein Teil für die Steuerung der Anwendungseinheit unkritischen Sensordaten entspricht, und
c) dieser Teil der Codewörter für die Übertragung der Zusatzdaten verwendet wird.

8. Verfahren nach Anspruch 5, wobei die Übertragung der Zusatzdaten in einer Folge von mehreren Codewörtern erfolgt und die Codewörter der Zusatzdaten sich wiederum in Zusatzsteuerdaten und Zusatznutzdaten unterteilt sind.

9. Verwendung des Verfahrens nach einem der vorangehenden Ansprüche zum Erfassen von Sensorherstellungsdaten, insbesondere einer individuellen Sensorbaugruppennummer.

10. Beschleunigungssensorbaugruppe zur Erzeugung eines Beschleunigungssignals in einem Insassenschutzsystem,
a) ein Beschleuniaunassensor zur Messen der Beschleunigung und **zur** Erzeugung eines **Beschleunigungssignals** sowie
b) eine **Datenübertranungseinheit** (13) zum Senden des **Beschleunigungssignals** an zu zumindest eine Aktivierungseinheit, wobei die Aktivierungseinheit die Beschleunigungssignale (s11) empfängt und in Abhängigkeit von diesen Beschleunigungssignalen (s11) über die Auslösung der Insassenschutzeinrichtung(en) entscheidet,
c) der Sensordatenwertebereich (+120 bis -120) des Beschleunigungssignals (s11) einen sicherheitsunkritischen Wertebereich (+3 bis -3) aufweist und die Aktivierungseinheit bei Beschleunigungssignalen in diesem sicherheitsunkritischen Wertebereich (+3 bis -3) keine Aktivierung der Insassenschutzeinrichtungen einleitet, **dadurch gekennzeichnet, dass**
d) die Datenübertraaungseinheit so ausgestaltet ist dass sie auf ein Steuersignal (s3/s5/s15/s16/Uon) hin anstelle des Sensordatensignals (s11) ein Zusatzdatensignal (s14) sendet wobei als Signalwertebereich (y0-ym) für das Zusatzdatensignal (s14) ausschliesslich der sicherheitsunkritische Wertebereich (+3 bis -3) des Sensordatenwertebereichs verwendet wird.

11. Beschleunigungssensorbaugruppe nach Anspruch 10, welcher auf einen Befehl einer Ausleseeinheit (5) oder einer Zentraleinheit (3) des Insassenschutzsystems von der Übertragung des Sensordatensignals (s11) auf die Übertragung der Zusatzdaten (s14) wechselt.

12. Beschleunigungssensorbaugruppe nach Anspruch 10, welcher auf einen extern von der Zentraleinheit (3) des Insassenschutzsystems als auch auf einen intern von der Beschleunigungssensorbaugruppe selbst erzeugten Reset nach einem Initialisationssignal zunächst das Zusatzdatensignal (s14) überträgt und nachfolgend auf die Übertragung des Sensordatensignals (s11) wechselt (12).

## Claims

1. A method for the transmission of a sensor data signal (s11) and an additional data signal (s14) from a sensor component (1) to at least one receiver of the sensor data signal (2) and a receiver of the additional data signal (3, 5) via a common transmission channel (4),
a) in which a sensor (11) measures a variable to be measured and generates a corresponding sensor data signal,
b) depending on the sensor data signal the receiver (2) of the sensor data signal (s11) controls an application unit,
c) in which the value range of the sensor data signal (x0 - xn) has a value range (x0 - x1) not critical for controlling the application unit, **characterised in that**
d) a data transmission unit (13) of a sensor component (1) sends an additional data signal (s14) to a control signal (s3/s5/s15/s16/Uon) at least temporarily in place of the sensor data signal (sol), in which the value range (x0 - x1) not critical for controlling the application unit is used as signal value range (y0 - ym) for the additional data signal (s14).

2. A method as claimed in Claim 1, in which a specific value range (x0 - x1) of the sensor data signal (s11) as noise range is to be attributed to noise of the variable to be measured and the sensor component and the noise range (x0- x1) is used as signal value range (y0- ym) for the additional data signal (s14).

3. A method as claimed in Claim 1, in which the receiver (2) of the sensor data signal compares the sensor data signal to a threshold value (x2) and controls the application unit only for a sensor data signal (s11) exceeding the threshold value (x2), in which the value range under this threshold value (x0 - x2) is used as signal value range (y0 - ym2) for the additional data signal (s14).

4. A method as claimed in Claim 1, sensor component (1) in a passenger protection system for vehicles in which,
a) the sensor component (1) measures a variable relevant to security and generates a sensor data signal (s11) corresponding to the variable relevant to security,
b) at least one activation unit (2) at least of one passenger protection device is provided, which receives the sensor data signals (s11) and depending on this sensor data signal (s11) decides on the resolution of the passenger protection device(s), in which
c) the sensor data value range (x0 - xn) of the sensor data signal (s11) has a value range (x0 - x1) not critical to safety and with sensor data signals (s11) in this value range (x0 - x1) not critical to safety the activation unit does not trigger activation of the passenger protection devices, and
d) the data transmission unit transmits the additional data signal (s14) to a preset control signal (s3, s5) using exclusively the value range (x0 - x1) not critical to safety.

5. A method as claimed in Claim 4, wherein
a) the sensor (11) is an acceleration sensor, the activation unit for deciding on activating the passenger protection device(s) executes integration of the acceleration signal and comparison of the acceleration integral signal with an activation threshold and
b) the value range not critical to safety used for the transmission of the additional data is determined such that even with integration of the largest values from the value range not critical to safety the activation threshold is definitely not reached.

6. A method as claimed in any one of the preceding claims, in which the data transmission unit (13) has a monitoring unit (15), which detects the current values of the sensor data signal (sol) at least during transmission of the additional data signal (s14), compares them to preset nominal values, and when these nominal values are exceeded the transmission of the additional data signal (s14) breaks off and switches to transmission of the sensor data signal (s11).

7. A method as claimed in any one of the preceding claims, in which data transmission occurs in digital code words,
a) wherein part of the code words is provided for the transmission of control signals and the other part is provided for the transmission of sensor data,
b) of the code words used for sensor data transmission again part for controlling the application unit corresponds to uncritical sensor data, and
c) this part of the code words is used for the transmission of additional data.

8. A method as claimed in Claim 5, wherein the transmission of additional data occurs in a sequence of several code words and the code words of the additional data are subdivided again into additional control data and additional utility data.

9. Use of the method as claimed in any one of the preceding claims for detecting sensor manufacturer data, in particular of an individual sensor component number.

10. An acceleration sensor component for generating an acceleration signal in a passenger protection system, in which,
a) an acceleration sensor for measuring acceleration and for generating an acceleration signal,
b) a data transmission unit (13) for sending the acceleration signal to at least one activation unit, in which the activation unit receives the acceleration signals (s11) and depending on these acceleration signals (s11) decides on the resolution of the passenger protection device(en),
c) the sensor data value range (+120 to -120) of the acceleration signal (s11) has a value range (+3 to -3) not critical to safety and the activation unit triggers no activation of the passenger protection devices for acceleration signals in this value range (+3 to -3) not critical to safety, **characterised in that**
d) the data transmission unit is designed such that it transmits an additional data signal (s14) in place of the sensor signal (s11) to a control signal (s3/s5/s15/s16/Uon), whereby exclusively the value range (+3 to -3) not critical to safety of the sensor data value range is used exclusively as signal value range (y0 - ym) for the additional data signal (s14).

11. An acceleration sensor component as claimed in Claim 10, which on command from a reader unit (5) or a central unit (3) of the passenger protection system switches from transmission of the sensor data signal (s11) to transmission of the additional data (s14).

12. An acceleration sensor component as claimed in Claim 10, which first transmits the additional data signal (s14) to a reset generated externally by the central unit (3) of the passenger protection system and to a reset generated internally by the acceleration sensor component following an initialisation signal, and subsequently switches (12) to the transmission of the sensor data signal (s11).

## Revendications

1. Procédé pour le transfert d'un signal de données de capteur (s11) et d'un signal de données supplémentaires (s14) d'un module de capteur (1) à au moins un récepteur du signal de données de capteur (2) et à un récepteur du signal de données supplémentaires (3, 5) par un canal de transfert commun (4),
a) un capteur (11) mesurant une grandeur à mesurer et générant un signal de données de capteur,
b) le récepteur (2) du signal de données de capteur (s11) commandant une unité d'application en fonction du signal de données de capteur,
c) la plage de valeurs du signal de données de capteur (x0 - xn) présentant une plage de valeurs (x0 - x1) non critique pour la commande de l'unité d'application, **caractérisé en ce que**
d) une unité de transfert des données (13) du module de capteur (1) envoie au moins momentanément un signal de données supplémentaires (s14) au lieu du signal de données de capteur (s11), suite à un signal de commande (s3/s5/s15/s16/Uon), la plage de valeurs (x0 - x1) non critique pour la commande de l'unité d'application étant utilisée comme plage de valeurs de signal (y0 - ym) pour le signal de données supplémentaires (s14).

2. Procédé selon la revendication 1, pour lequel une plage de valeurs (x0 - x1) déterminée du signal de données de capteur (s11) doit être attribuée à un bruit de la valeur à mesurer ainsi que du module de capteur, comme plage de bruit, et pour lequel la plage de bruit (x0 - x1) est utilisée comme plage de valeurs de signal (y0 - ym) pour le signal de données supplémentaires (s14).

3. Procédé selon la revendication 1, pour lequel le récepteur (2) du signal de données de capteur compare le signal de données de capteur avec une valeur de seuil (x2) et excite l'unité d'application uniquement pour un signal de données de capteur (s11) dépassant la valeur de seuil (x2), la plage de valeurs inférieure à cette valeur de seuil (x0 - x2) étant utilisée comme plage de valeurs de signal (y0 - ym2) pour le signal de données supplémentaires (s14).

4. Procédé selon la revendication 1, module de capteur (1) dans un système de protection des occupants pour véhicules à moteur,
a) le module de capteur (1) mesurant une valeur relative à la sécurité et générant un signal de données de capteur (s11) correspondant à la valeur relative à la sécurité,
b) au moins une unité d'activation (2) d'au moins un dispositif de protection des occupants étant prévue, laquelle reçoit les signaux de données de capteur (s11) et décide du déclenchement du/des dispositif(s) de protection des occupants en fonction de ce signal de données de capteur (s11),
c) la plage de valeurs de données de capteur (x0 - xn) du signal de données de capteur (s11) présentant une plage de valeurs (x0 - x1) non critique relativement à la sécurité et l'unité d'activation n'entraînant aucune activation des dispositifs de protection des occupants pour des signaux de données de capteur (s11) dans cette plage de valeurs (x0 - x1) non critique relativement à la sécurité, et
d) l'unité de transfert des données transférant le signal de données supplémentaires (s14) par l'utilisation exclusive de la plage de valeurs (x0 - x1) non critique relativement à la sécurité, suite à un signal de commande (s3, s5) spécifié.

5. Procédé selon la revendication 4,
a) le capteur (11) étant un capteur d'accélération, l'unité d'activation effectuant une intégration du signal d'accélération et une comparaison du signal d'intégration d'accélération avec un seuil d'activation pour la décision sur l'activation du/des dispositif(s) de protection des occupants, et
b) la plage de valeurs non critique relativement à la sécurité utilisée pour le transfert des données supplémentaires étant spécifiée de telle sorte que, même lors d'une intégration des valeurs les plus élevées de la plage de valeurs non critique relativement à la sécurité, le seuil d'activation n'est atteint en aucun cas.

6. Procédé selon l'une des revendications précédentes, pour lequel l'unité de transfert des données (13) présente une unité de surveillance (15), laquelle saisit les valeurs actuelles du signal de données de capteur (s11) au moins pendant le transfert du signal de données supplémentaires (s14), les compare avec des valeurs prescrites spécifiées et interrompt le transfert du signal de données supplémentaires (s14) lors du dépassement de ces valeurs prescrites, et passe au transfert du signal de données de capteur (s11).

7. Procédé selon l'une des revendications précédentes, pour lequel le transfert des données a lieu par mots de code numériques,
a) une partie des mots de code étant prévue pour le transfert de signaux de commande et l'autre partie pour le transfert des données de capteur,
b) une partie de ces mêmes mots de code utilisés pour le transfert des données de capteur correspondant à des données de capteur non critiques pour la commande de l'unité d'application, et
c) cette partie des mots de code étant utilisée pour le transfert des données supplémentaires.

8. Procédé selon la revendication 5, le transfert des données supplémentaires ayant lieu par une succession de plusieurs mots de code et les mots de code des données supplémentaires étant eux-mêmes subdivisés en données de commande supplémentaires et en données utiles supplémentaires.

9. Utilisation du procédé selon l'une des revendications précédentes pour la saisie de données de fabrication de capteur, en particulier d'un numéro individuel de module de capteur.

10. Module de capteur d'accélération pour la génération d'un signal d'accélération sur un système de protection des occupants,
a) un capteur d'accélération pour le mesurage de l'accélération et pour la génération d'un signal d'accélération, ainsi que
b) une unité de transfert des données (13) pour l'envoi du signal d'accélération à au moins une unité d'activation, l'unité d'activation recevant les signaux d'accélération (s11) et décidant du déclenchement du/des dispositif(s) de protection des occupants en fonction de ces signaux d'accélération (s11),
c) la plage de valeurs de données de capteur (+120 à -120) du signal d'accélération (s11) présentant une plage de valeurs (+3 à -3) non critique relativement à la sécurité et l'unité d'activation n'entraînant aucune activation des dispositifs de protection des occupants, pour des signaux d'accélération dans cette plage de valeurs (+3 à -3) non critique relativement à la sécurité, **caractérisé en ce que**
d) l'unité de transfert des données est équipée de telle sorte qu'elle envoie un signal de données supplémentaires (s14) au lieu du signal de données de capteur (s11) suite à un signal de commande (s3/s5/s15/s16/Uon), la plage de valeurs (+3 à -3), non critique relativement à la sécurité, de la plage de valeurs de données de capteur étant employée exclusivement, comme plage de valeurs de signal (y0 - ym) pour le signal de données supplémentaires (s14).

11. Module de capteur d'accélération selon la revendication 10, lequel passe du transfert de signal de données de capteur (s11) au transfert de signal de données supplémentaires (s14) suite à une commande d'une unité de lecture (5) ou d'une unité centrale (3) du système de protection des occupants.

12. Module de capteur d'accélération selon la revendication 10, lequel, après un signal d'initialisation, transmet d'abord le signal de données supplémentaires (s14) et passe (12) ensuite au transfert du signal de données de capteur (s11), suite à une remise à zéro générée de façon externe par l'unité centrale (3) du système de protection des occupants ainsi que suite à une remise à zéro générée de façon interne par le module de capteur d'accélération lui-même.
